# EUROPEAN PATENT SPECIFICATION

(11) **EP 3 484 125 B1**
(45) Date of publication and mention of the grant of the patent: **07.09.2022**
(21) Application number: 17823684.0
(22) Date of filing: 07.07.2017
(51) Int. Cl.: H04L 9/08, H04L 67/025, H04L 67/10, H04L 67/565, H04L 9/32

(54) **METHOD AND DEVICE FOR SCHEDULING INTERFACE OF HYBRID CLOUD**
VERFAHREN UND VORRICHTUNG ZUR PLANUNG DER SCHNITTSTELLE EINER HYBRIDEN CLOUD
PROCÉDÉ ET DISPOSITIF POUR PROGRAMMER L'INTERFACE D'UN NUAGE HYBRIDE

(30) Priority: 08.07.2016 CN 201610539500; 08.07.2016 CN 201610539009
(43) Date of publication of application: 15.05.2019
(73) Proprietor: Tencent Technology (Shenzhen) Company Limited, Shenzhen City, Guangdong 518057 (CN)
(72) Inventor: WU, Xiaoqing, Shenzhen, Guangdong 518057 (CN); LIU, Baoyuan, Shenzhen, Guangdong 518057 (CN); ZHENG, Songjian, Shenzhen, Guangdong 518057 (CN); LUO, Dongshui, Shenzhen, Guangdong 518057 (CN); WEI, Long, Shenzhen, Guangdong 518057 (CN); XU, Yue, Shenzhen, Guangdong 518057 (CN)
(74) Representative: Eisenführ Speiser
(86) International application number: PCT/CN2017/092259
(87) International publication number: WO 2018/006872

(56) References cited:
- WO-A2-2015/195724
- CN-A- 102 255 933
- CN-A- 102 546 735
- CN-A- 103 701 761
- CN-A- 104 935 568
- CN-A- 105 306 534
- CN-A- 106 101 258

## Description

### FIELD OF THE TECHNOLOGY

The present disclosure relates to the field of cloud computing technologies, and in particular, to an interface invocation method and interface invocation apparatus for a hybrid cloud.

### BACKGROUND OF THE DISCLOSURE

Cloud computing is a mode based on related services to Internet for adding, using and delivering, and generally relates to providing dynamic, easily-extensible, and usually virtualized resources through the Internet. With the development of cloud computing technologies, lots of different types of cloud platforms appear. The cloud platforms may be classified, according to a cloud computing manner, into an Openstack cloud platform, a Qcloud cloud platform, an AWS cloud platform, or the like.

A cloud computing technology that combines a public cloud platform with a private cloud platform is referred to as a hybrid cloud. Currently, many enterprises have two kinds of services, an external service and an internal service. When in the external service, in consideration of saving costs, the enterprises hope to apply a public cloud platform. When in the internal service, in consideration of safety, the enterprises hope to apply a private cloud platform. Therefore, the hybrid cloud is more popular.

Because different types of cloud platforms combined in a hybrid cloud are independently deployed, and interface invocation standards of the different types of cloud platforms are different, a hybrid cloud has various different interface invocation methods that are not uniform. This causes great inconvenience to system application and maintenance of the hybrid cloud.

In addition, in an implementation process of cloud computing, a resource (for example, each index that indicates a running condition of the cloud platform) of a cloud platform needs to be monitored, to help a user learn a running condition of the cloud platform. Because resource monitoring standards between different types of cloud platforms in the conventional technology are different, resource monitoring of the hybrid cloud needs to be performed between the different types of cloud platforms by turns. That is, the user needs to switch to another cloud platform to continue to perform resource monitoring after performing resource monitoring on a cloud platform. This leads to the quite low efficiency of resource monitoring of the hybrid cloud.

WO 2015/195724 A2 discloses that user interface integration across multiple clouds is achieved by hosting UI extensions for different services in the same browser window. The UI extensions are initialized by a shell with any necessary security context for the corresponding cloud. The shell provides versioning so that the newest version of the UI is presented to users for all versions of a service. A connector in a local cloud provides translation between APIs across different clouds.

CN 102255933 A discloses a cloud service medium, a cloud computing method and a cloud system. The cloud service medium comprises a cloud service releasing interface module, a cloud service consuming interface module, a cloud service processing module and a cloud service adapting module, wherein the cloud service releasing interface module is used for subscribing for cloud computing services and resource information which are provided by multiple cloud service providers; the cloud service consuming interface module is used for providing a consuming interface by which cloud service requestors can be accessed to the cloud service providers for the cloud service requestors; the cloud service processing module is used for processing the cloud service consumption requests of the cloud service providers; and the cloud adapting module is used for adapting the cloud computing services and resources provided by the cloud service providers for the cloud service requestors according to the cloud service consumption requests. According to the invention, the cloud service requestors can use the cloud services provided by different cloud service providers, the system resource is saved and the system efficiency is improved.

CN 104935568 A discloses an interface authentication signature method facing a cloud platform. The method comprises the following steps of S1 applying for a security certificate, namely, applying for a Secret Id and a Secret Key in the uniform cloud platform, wherein the Secret Id is used to identify an API caller, and the Secret Key is used to encrypt a signature character string and verify the signature character string at a server end; S2 generating a signature, namely, generating the signature according to the security certificate of the S1 and by combining a region parameter, a timestamp parameter and a random positive integer parameter; S3 carrying out the interface debugging test, namely, verifying the generated signature, wherein the interfaces of the cloud platform can be accessed after the signature verification passes. The interface authentication signature method facing the cloud platform of the present invention realizes the data interface authentication access by utilizing an encryption technology and a database access multi-transaction processing technology, can guarantee the non-interfering interface access data transmission, and is safe and high-speed.

### SUMMARY

In view of this, the present disclosure provides an interface invocation method and an interface invocation apparatus for a hybrid cloud, to unify an interface invocation of the hybrid cloud.

An interface invocation method for a hybrid cloud is provided according to an embodiment. The method includes:
receiving an interface invocation request for a hybrid cloud from an invoker, where the interface invocation request is used for indicating an interface of a first target cloud platform that the invoker requests to invoke;
determining the interface of the first target cloud platform according to parameters related to the interface of the first target cloud platform carried in the interface invocation request; and
sending the interface invocation request to the interface of the first target cloud platform,
wherein the method further comprises:
   receiving a resource monitoring request for a hybrid cloud, wherein the resource monitoring request is used for requesting to obtain resource monitoring data of the hybrid cloud;
   reading instance ID information, which is comprised in the resource monitoring request for the hybrid cloud, of each cloud server in the hybrid cloud;
   calling a resource information table generated when the hybrid cloud is created;
   determining, according to the instance ID information of each cloud server in the hybrid cloud and the resource information table, an access address of a second target cloud platform corresponding to each cloud server in the hybrid cloud to obtain an access address of the second target cloud platform of the hybrid cloud, wherein there are a plurality of second target cloud platforms;
   based on the access addresses of the plurality of second target cloud platforms corresponding to the hybrid cloud, dividing the resource monitoring request for the hybrid cloud into resource monitoring requests for the plurality of second target cloud platforms, and respectively sending the resource monitoring requests for the plurality of second target cloud platforms to the corresponding second target cloud platforms, so that the plurality of second target cloud platforms synchronously obtain their own resource monitoring data, wherein the resource monitoring request for a second target cloud platform is used for requesting to obtain the resource monitoring data of the second target cloud platform;
   receiving the resource monitoring data from each of the plurality of second target cloud platforms; and
   merging the resource monitoring data from the plurality of second target cloud platforms to obtain the resource monitoring data of the hybrid cloud.

An interface invocation apparatus for a hybrid cloud is provided according to an embodiment. The apparatus includes:
a processor, and
a memory storing instructions, when executed by the processor, causing the processor to perform the interface invocation method for a hybrid cloud according to any one of claims 1 to 7.

According to the embodiment of the disclosure, an interface invocation request for a hybrid cloud is received from an invoker, the interface invocation request is used for indicating an interface of a first target cloud platform that the invoker requests to invoke; the interface of the first target cloud platform is determined according to parameters related to the interface of the first target cloud platform carried in the interface invocation request; and the interface invocation request is sent to the interface of the first target cloud platform. In this way, an interface invocation of the hybrid cloud can be unified, thereby making system application and maintenance of the hybrid cloud more convenient.

### BRIEF DESCRIPTION OF THE DRAWINGS

To describe the technical solutions in the embodiments of the present disclosure or in the conventional art more clearly, the following briefly introduces the accompanying drawings required for describing the embodiments or the conventional art. Apparently, the accompanying drawings in the following description show merely the embodiments of the present disclosure, and a person of ordinary skill in the art may still derive other drawings from these accompanying drawings without creative efforts.
FIG. 1 is a schematic diagram of a system framework of a conventional hybrid cloud;
FIG. 2 is a schematic diagram of a system framework of a hybrid cloud according to an embodiment of the disclosure;
FIG. 3 is a flow chart of an interface invocation method for a hybrid cloud according to an embodiment of the disclosure;
FIG. 4 is a flow chart of another interface invocation method for a hybrid cloud according to an embodiment of the disclosure;
FIG. 5 is a schematic diagram of an application example of an interface invocation method for a hybrid cloud according to an embodiment of the disclosure;
FIG. 6 is a structural block diagram of an interface invocation apparatus for a hybrid cloud according to an embodiment of the disclosure;
FIG. 7 is a structural block diagram of another interface invocation apparatus for a hybrid cloud according to an embodiment of the disclosure;
FIG. 8 is a structural diagram of a determining module according to an embodiment of the disclosure;
FIG. 9 is a structural diagram of an authentication module according to an embodiment of the disclosure;
FIG. 10 is a structural block diagram of hardware of an interface invocation apparatus for a hybrid cloud according to an embodiment of the disclosure;
FIG. 11 is a structural diagram of an interface invocation system for a hybrid cloud according to an embodiment of the disclosure;
FIG. 12 is a flow chart of a resource monitoring method for a hybrid cloud according to an embodiment of the disclosure;
FIG. 13 is a flow chart of a method for determining a second target cloud platform of the hybrid cloud according to the resource monitoring request for the hybrid cloud according to an embodiment of the disclosure;

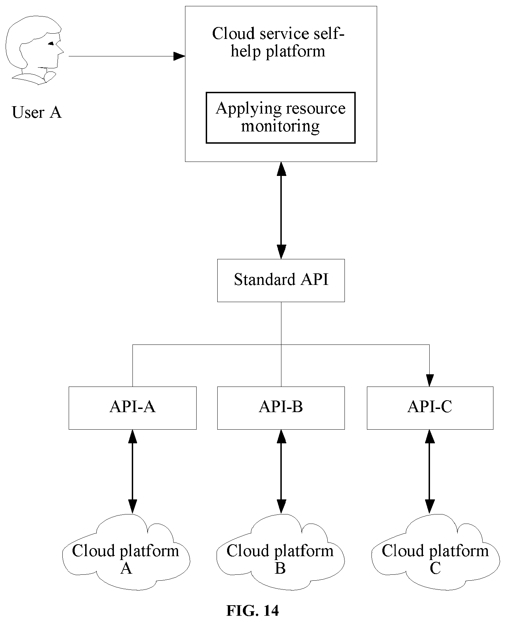

FIG. 14 is a schematic diagram of an application example of a resource monitoring method for a hybrid cloud according to an embodiment of the disclosure;
FIG. 15 is a structural block diagram of a resource monitoring system for a hybrid cloud according to an embodiment of the disclosure;
FIG. 16 is a structural diagram of a determining module according to an embodiment of the disclosure; and
FIG. 17 is a structural block diagram of another resource monitoring system for a hybrid cloud according to an embodiment of the disclosure.

### DESCRIPTION OF EMBODIMENTS

The following clearly and completely describes the technical solutions in the embodiments of the disclosure with reference to the accompanying drawings in the embodiments of the disclosure. Obviously, the described embodiments are only some embodiments instead of all embodiments of the disclosure. All other embodiments obtained by a person of ordinary skill in the art based on the embodiments in the disclosure without creative effects shall fall within the protection scope of the present disclosure.

The embodiments of the disclosure are mainly applied to a hybrid cloud. The following describes a system framework of a conventional hybrid cloud and a system framework of a hybrid cloud in the disclosure in detail.

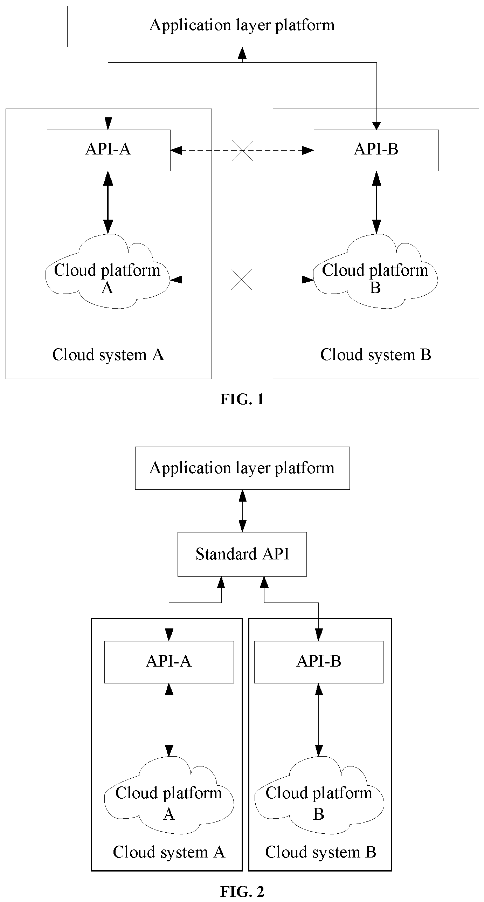

Referring to FIG. 1, FIG. 1 is a schematic diagram of a system framework of a conventional hybrid cloud. As shown in FIG. 1, the hybrid cloud includes a cloud system A and a cloud system B. The two systems are independently deployed. An application programming interface API-A corresponding to the cloud system A and an application programming interface API-B corresponding to the cloud system B are relatively independent. Therefore, there is no association relationship between the cloud system A and the cloud system B. Based on this, when a user needs to invoke, by using an application layer platform, interfaces of a cloud platform A and a cloud platform B to process user business, the API-A and the API-B are separately invoked, i.e., they cannot be uniformly invoked.

The disclosure provides a new hybrid cloud. Referring to FIG. 2, FIG. 2 is a schematic diagram of a system framework of a hybrid cloud according to an embodiment of the disclosure. As shown in FIG. 2, the hybrid cloud includes a standard application programming interface API, a cloud system A and a cloud system B. Because the standard application programming interface API is simultaneously connected to an application programming interface API-A corresponding to the cloud system A and an application programming interface API-B corresponding to the cloud system B, there is a particular association relationship between the cloud system A and the cloud system B. Based on this, when a user needs to invoke, by using an application layer platform, interfaces of a cloud platform A and a cloud platform B to process user business, the interfaces of the cloud platform A and the cloud platform B may be uniformly invoked by invoking the standard application programming interface API.

Based on the hybrid cloud system shown in FIG. 2, an embodiment of this application provides an interface invocation method for a hybrid cloud that can unify an interface invocation of the hybrid cloud, thereby making system application and maintenance of the hybrid cloud more convenient. An execution subject of the interface invocation method for a hybrid cloud in the embodiment of this application may be a background server. The background server may be a background server of the standard application programming interface API.

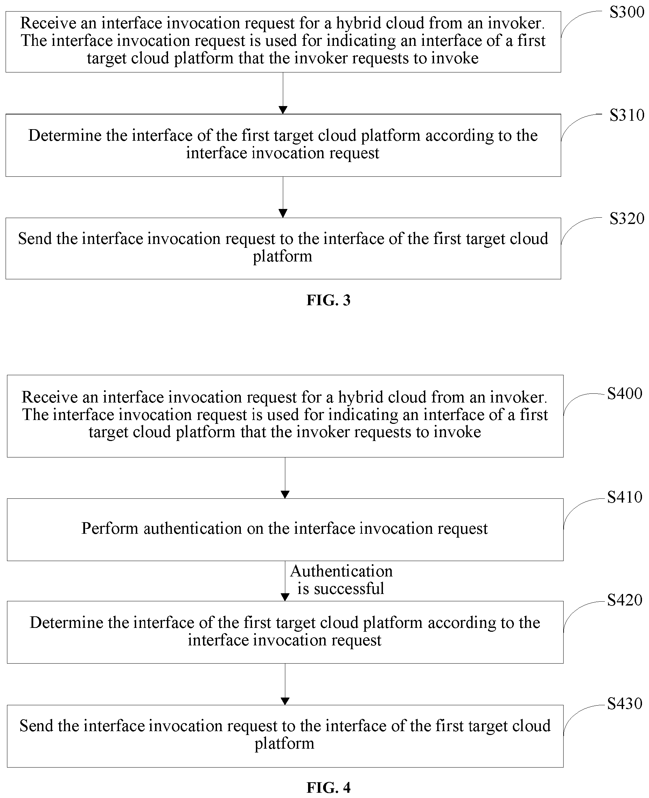

Referring to FIG. 3, FIG. 3 is a flow chart of an interface invocation method for a hybrid cloud according to an embodiment of the disclosure. Referring to FIG. 3, the method may include steps S300 to S320.

In step S300, an interface invocation request for a hybrid cloud is received from an invoker. The interface invocation request is used for indicating an interface of a first target cloud platform that the invoker requests to invoke.

It should be noted that the invoker may be a background server of the application layer platform. The interface of the target cloud platform may be an application programming interface API corresponding to different functions (for example, resource scheduling, resource monitoring, and resource management) of the cloud platform, which is not limited in this embodiment.

In step S310, the interface of the first target cloud platform is determined according to the interface invocation request.

The interface invocation request for the hybrid cloud may carry some parameters related to the interface of the first target cloud platform. The interface of the target cloud platform may be determined by using the parameters. The following embodiment describes the specifics in detail.

In step S320, the interface invocation request is sent to the interface of the first target cloud platform.

The interface invocation method for a hybrid cloud in the embodiment of the disclosure includes: receiving an interface invocation request for a hybrid cloud from an invoker, where the interface invocation request is used for indicating an interface of a first target cloud platform that the invoker requests to invoke; determining the interface of the first target cloud platform according to the interface invocation request; and sending the interface invocation request to the interface of the first target cloud platform. The foregoing interface invocation method can unify an interface invocation of the hybrid cloud, thereby making system application and maintenance of the hybrid cloud more convenient.

FIG. 4 is a flow chart of another interface invocation method for a hybrid cloud according to an embodiment of the disclosure. Referring to FIG. 4, the method may include steps S400 to S430.

In step S400, an interface invocation request for a hybrid cloud is received from an invoker. The interface invocation request is used for indicating an interface of a first target cloud platform that the invoker requests to invoke.

Specifically, in this embodiment, an interface invocation request including a uniform resource locator URL address that is sent by an invoker may be received.

In step S410, authentication is performed on the interface invocation request. If the authentication is successful, step S420 to step S430 are performed. If the authentication is not successful, the whole procedure is ended.

To ensure invocation safety of the foregoing standard API, an embodiment of the disclosure further discloses an authentication method for the interface invocation request. The specifics are described below.

The invoker needs to apply an account from a background server of the standard application programming interface API in advance. The account includes at least two parameters, namely, an AccessKey and a SecretKey. The AccessKey is used for identifying an identity of the invoker, and the SecretKey is a secret key used for encrypting a signature character string and verifying the signature character string at the background server of the standard API.

In this embodiment, the invoker may send an interface invocation request generated based on an HTTP (Hyper Text Transfer Protocol) to the standard API, to implement resource scheduling of the hybrid cloud. The interface invocation request includes a request type (HTTP Method, for example, GET/POST/PATCH/PUT/DELETE) and a URL (Uniform Resource Locator) address. Because the hybrid cloud includes various different types of cloud platforms, a cloud type parameter may be added in the URL address to represent a type of the first target cloud platform that the HTTP requests to invoke. For example, a tocloud represents that a type of the first target cloud platform that the HTTP requests to invoke is an Openstack cloud platform, a tacloud represents that a type of the first target cloud platform that the HTTP requests to invoke is an AWS, and a tqcloud represents that a type of the first target cloud platform that the HTTP requests to invoke is a Qcloud. In addition, because target cloud platforms of a same type possibly include interfaces in multiple different regions (namely, equipment rooms), a region parameter may be added in the URL address to represent a region where an interface of the first target cloud platform that the HTTP requests to invoke locates. For example, region-002 represents an interface of a second region. For example, an HTTP request GTE http://api.cloud.com/v1.0/tacloud/servers? region=region-002 represents the invoker wants to invoke an interface in a second region of a cloud platform with an AWS type.

When the invoker sends the interface invocation request to the standard API, an HTTP Header that stores public parameters as shown in Table 1 also needs to be sent to the standard API. A Signature is a signature string obtained by signing, based on an HMAC-SHA1 algorithm, a character string including a request type HTTP Method, a timestamp parameter Timestamp, a URL address, a platform authentication code AppKey, and a user authentication code AccessKey by using a key parameter SecretKey corresponding to a user authentication code AccessKey, and then encoding by using Base64.

**Table 1**

| Name | Type | Description | Mandatory |
|---|---|---|---|
| Timestamp | UInt | Current UNIX timestamp | Yes |
| AppKey | String | Platform authentication code, used for authenticating validity of platform access | Yes |
| AccessKey | String | User authentication code, used for authenticating user validity, and an AccessKey identifying an identity and a SecretKey that applied on the platform, where the SecretKey is used for generating a Signature | Yes |
| Signature | String | Request signature, used for authenticating validity of the request | Yes |

For example, parameter values of an AccessKey and a SecretKey included in an account applied by the invoker from the background server of the standard API in advance are as follows:
AccessKey: AKIAIOSFODNN7EXAMPLE; and
SecretKey: wJalrXUtnFEMIK7MDENGbPxRfiCYEXAMPLEKEY.

The interface invocation request sent from the invoker to the standard API is: GET http://api.cloud.com/v1.0/openstack-0001/servers?name=my_server.

Parameter values of a Timestamp and an AppKey are as follows:
Timestamp: 1462333570; and
AppKey: APP-001.

The HMAC-SHA1 algorithm and wJalrXUtnFEMIK7MDENGbPxRfiCYEXAMPLEKEY signature are applied on a character string 'GET'+'1462333570' +http://api.cloud.com/v1.0/0penstack-0001/servers?name=my_server'+'APP-001'+'AKIAIOSFODNN7EXAMPLE', to obtain hex=e360a54f95c81dc5fc28d667a19fe0d11f1b0d33, and the hex is encoded by using the Base64 to obtain Signature=42ClT5XIHcX8KNZnoZ/ g0R8bDTM.

Therefore, the interface invocation request sent from the invoker to the standard API is as follows: GET http://api.cloud.com/v1.0/openstack-0001/servers?name=my_server.

The HTTP Header sent from the invoker to the standard API is as follows:

| | |
|---|---|
| Timestamp | 1462333570 |
| AppKey | APP-001 |
| AccessKey | AKIAIOSFODNN7EXAMPLE |
| Signature | 42ClT5XIHcX8KNZnoZ/g0R8bDTM 00 |

The standard API transmits a received interface invocation request and HTTP Header to the background server of the standard API. The background server queries a database to obtain a parameter SecretKey preallocated to the invoker, and performs authentication on a Signature by using the parameter. If each piece of content in a character string including an HTTP Method, a Timestamp, a URL, an AppKey and an AccessKey obtained after the authentication is performed is consistent with a respective piece of content in the interface invocation request and the HTTP Header that are received by the standard API, it is determined that the authentication is successful. That is, the invoker is allowed to invoke the standard API. If pieces of content in a character string including an HTTP Method, a Timestamp, a URL, an AppKey and an AccessKey obtained after the authentication is performed are not completely consistent with respective pieces of content in the interface invocation request and the HTTP Header that are received by the standard API, it is determined that the authentication is not successful. That is, the invoker is not allowed to invoke the standard API.

In step S420, the interface of the first target cloud platform is determined according to the interface invocation request.

In this step, the interface of the first target cloud platform may be determined by using the following method including: determining a type of the first target cloud platform according to a cloud platform type parameter in the URL address; determining a region, where the interface of the first target cloud platform locates, according to a region parameter in the URL address; and determining an interface in the region as the interface of the first target cloud platform based on the type of the first target cloud platform and the region where the interface of the first target cloud platform locates.

In step S430, the interface invocation request is sent to the interface of the first target cloud platform.

In this embodiment, the foregoing authentication operation is added, so as to ensure a valid user to successfully schedule the standard API, and an invalid user cannot successfully schedule the standard API, thereby ensuring scheduling security of a resource of the hybrid cloud.

An application example of an interface invocation method for a hybrid cloud according to an embodiment of this application may be as follows.

Using that a hybrid cloud to be scheduled by a user A by using an application layer includes a cloud platform A, a cloud platform B and a cloud platform C as an example, the cloud platform A, the cloud platform B and the cloud platform C are respectively corresponding to an API-A, an API-B and an API-C. A type of the cloud platform A is the Openstack cloud platform, a region of an equipment room is North China, the cloud platform A includes cloud servers a1, a2 and a3, and a resource scheduling API corresponding to the cloud platform A is an API-A. A type of the cloud platform B is the AWS, a region of an equipment room is South China, the cloud platform B includes cloud servers b1, b2 and b3, and a resource scheduling API corresponding to the cloud platform B is an API-B. A type of the cloud platform C is the Qcloud, a region of an equipment room is central China, the cloud platform C includes cloud servers c1, c2 and c3, and a resource scheduling API corresponding to the cloud platform C is an API-C.

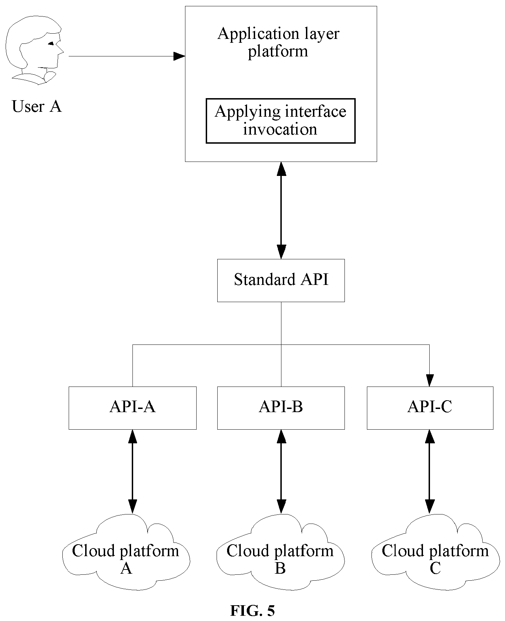

Referring to FIG. 5, an application layer platform provides an interface invocation applying interface. The user A triggers an applying interface invocation button on the interface invocation applying interface, to generate an interface invocation request for a hybrid cloud. For example, the interface invocation request is specifically GTE http://api.cloud.com/v1.0/tocloud/servers?region=region-001, used for instructing to schedule resources of the cloud servers a1, a2 and a3. After the application layer platform obtains the foregoing interface invocation request, the application layer platform sends the interface invocation request to a background server of a standard API. The background server of the standard API determines an interface of a target cloud platform corresponding to the interface invocation request is an API-A. The background server of the standard API sends the interface invocation request for the hybrid cloud to the cloud platform A via the API-A. The cloud platform A schedules a resource thereof, obtains a corresponding resource scheduling result, and sends the resource scheduling result to a background server of the application layer platform via the API-A and the standard API. The background server of the application layer platform displays the resource scheduling result to the user A by using the interface invocation applying interface.

The following describes an interface invocation apparatus for a hybrid cloud in an embodiment of this application. Cross-reference may be made between the interface invocation apparatus for a hybrid cloud described below and the foregoing interface invocation method for a hybrid cloud.

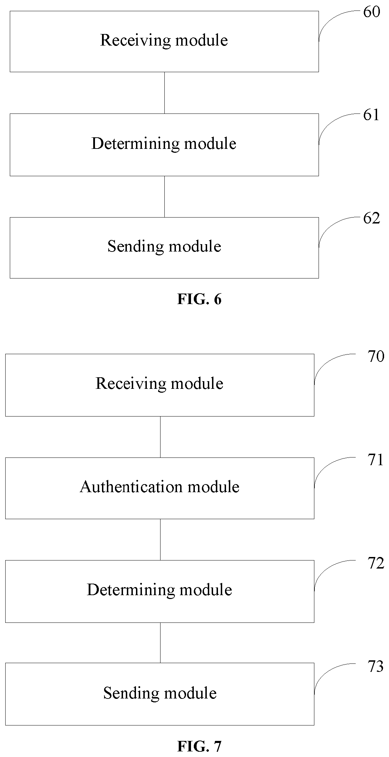

FIG. 6 is a structural block diagram of an interface invocation apparatus for a hybrid cloud according to an embodiment of this application. The interface invocation apparatus for a hybrid cloud may specifically be a background server. Referring to FIG. 6, the interface invocation apparatus for a hybrid cloud may include a receiving module 60, a determining module 61 and a sending module 62.

The receiving module 60 is configured to receive an interface invocation request for a hybrid cloud from an invoker. The interface invocation request is used for indicating an interface of a first target cloud platform that the invoker requests to invoke.

The determining module 61 is configured to determine the interface of the first target cloud platform according to the interface invocation request.

The sending module 62 is configured to send the interface invocation request to the interface of the first target cloud platform.

FIG. 7 is a structural block diagram of another interface invocation apparatus for a hybrid cloud according to an embodiment of this application. The interface invocation apparatus for a hybrid cloud may specifically be a background server. Referring to FIG. 7, the interface invocation apparatus for a hybrid cloud may include a receiving module 70, an authentication module 71, a determining module 72 and a sending module 73.

The receiving module 60 is configured to receive an interface invocation request for a hybrid cloud from an invoker. The interface invocation request is used for indicating an interface of a first target cloud platform that the invoker requests to invoke.

The authentication module 71 is configured to: perform authentication on the interface invocation request before the interface of the first target cloud platform is determined according to the interface invocation request; and trigger the determining module 72 to determine the interface of the first target cloud platform according to the interface invocation request in a case that the authentication is successful.

The determining module 72 is configured to determine the interface of the first target cloud platform according to the interface invocation request.

The sending module 73 is configured to send the interface invocation request to the interface of the first target cloud platform.

In an implementation, the receiving module is specifically configured to: receive an interface invocation request including a uniform resource locator URL address that is sent by an invoker.

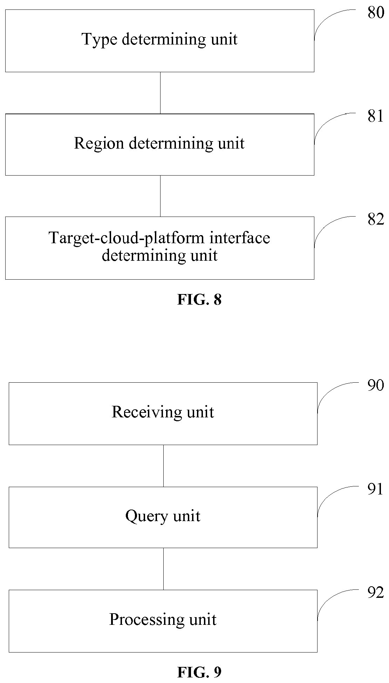

In an implementation, FIG. 8 is a structural diagram of a determining module. Referring to FIG. 8, the determining module specifically includes a type determining unit 80, a region determining unit 81 and a target-cloud-platform interface determining unit 82.

The type determining unit 80 is configured to determine a type of the first target cloud platform according to a cloud platform type parameter in the URL address.

The region determining unit 81 is configured to determine a region, where the interface of the first target cloud platform locates, according to a region parameter in the URL address.

The target-cloud-platform interface determining unit 82 is configured to determine an interface in the region as the interface of the first target cloud platform.

In an implementation, FIG. 9 is a structural diagram of an authentication module. Referring to FIG. 9, the authentication module specifically includes a receiving unit 90, a query unit 91 and a processing unit 92.

The receiving unit 90 is configured to receive an HTTP header sent by the invoker. The HTTP header includes a timestamp parameter Timestamp, a platform authentication code AppKey, a user authentication code AccessKey, and a signature string Signature.

The query unit 91 is configured to obtain a key parameter SecretKey preallocated to the invoker.

The processing unit 92 is configured to: perform authentication on the signature string Signature by using the key parameter SecretKey, and obtain a character string including an HTTP Method, a Timestamp, a URL address, an AppKey, and an AccessKey; and determine that the authentication is successful in a case that the HTTP Method in the character string is consistent with the request type in the interface invocation request, the URL address in the character string is consistent with the URL address in the interface invocation request, the Timestamp in the character string is consistent with the Timestamp in the HTTP Header, the AppKey in the character string is consistent with the AppKey in the HTTP header, and the AccessKey in the character string is consistent with the AccessKey in the HTTP Header.

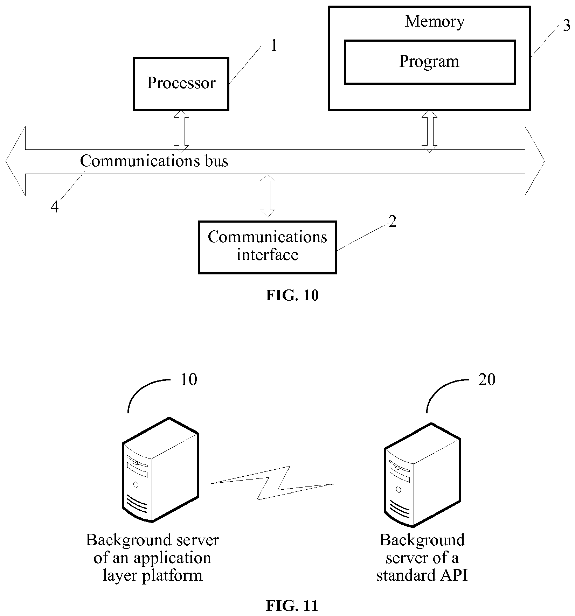

In an implementation, the interface invocation apparatus for a hybrid cloud may be a hardware device, may alternatively be software, and may alternatively be hardware instruction software. The foregoing modules and units may be disposed in a functional module in the interface invocation apparatus for a hybrid cloud. FIG. 10 is a structural block diagram of hardware of an interface invocation apparatus for a hybrid cloud. Referring to FIG. 10, the interface invocation apparatus for a hybrid cloud may include: a processor 1, a communications interface 2, a memory 3 and a communications bus 4. The processor 1, the communications interface 2 and the memory 3 communicate with each other by using the communications bus 4. The communications interface 2 may be an interface of a communication module, for example, an interface of a GSM module.

The processor 1 is configured to execute a program. The memory 3 is configured to store a program. The program may include program code, and the program code includes computer operation instructions.

The processor 1 may be a central processing unit CPU or an Application Specific Integrated Circuit (ASIC) or may be one or more integrated circuits for implementing the embodiments of the disclosure. The memory 3 may include a high-speed RAM memory, and may also include a non-volatile memory (non-volatile memory), for example, at least one magnetic disk memory.

The program may be specifically used for:
receiving an interface invocation request for a hybrid cloud from an invoker, where the interface invocation request is used for indicating an interface of a first target cloud platform that the invoker requests to invoke;
determining the interface of the first target cloud platform according to the interface invocation request; and
sending the interface invocation request to the interface of the first target cloud platform.

The following describes an interface invocation system for a hybrid cloud according to the present disclosure. A structural diagram of the interface invocation system for a hybrid cloud is as shown in FIG. 11. The interface invocation system for a hybrid cloud includes a background server 10 of an application layer platform and a background server 20 of a standard API.

The background server of the application layer platform is configured to: receive an interface invocation request for a hybrid cloud that is sent by a user; and send the interface invocation request to the background server of the standard API. The interface invocation request is used for indicating an interface of a first target cloud platform that the invoker requests to invoke.

The background server of the standard API is configured to: receive the interface invocation request sent by the background server of the application layer platform; determine the interface of the first target cloud platform according to the interface invocation request; and send the interface invocation request to the interface of the first target cloud platform.

In an implementation, the background server of the standard API is further configured to: perform authentication on the interface invocation request before the interface of the first target cloud platform is determined according to the interface invocation request; and determine the interface of the first target cloud platform according to the interface invocation request in a case that the authentication is successful.

In an implementation, the background server of the standard API is specifically configured to receive an interface invocation request including a uniform resource locator URL address that is sent by the background server of the application layer platform.

In an implementation, the background server of the standard API is specifically configured to:
determine a type of the first target cloud platform according to a cloud platform type parameter in the URL address;
determine a region, where the interface of the first target cloud platform locates, according to a region parameter in the URL address; and
determine an interface in the region as the interface of the first target cloud platform.

The background server of the standard API is specifically configured to:
receive an HTTP header sent by the invoker, where the HTTP header includes a timestamp parameter Timestamp, a platform authentication code AppKey, a user authentication code AccessKey, and a signature string Signature;
obtain a key parameter SecretKey preallocated to the invoker;
perform authentication on the signature string Signature by using the key parameter SecretKey, and obtain a character string including a request type HTTP Method, a timestamp parameter Timestamp, a URL address, a platform authentication code AppKey, and a user authentication code AccessKey; and
determine that the authentication is successful in a case that the request type HTTP Method in the character string is consistent with the request type in the interface invocation request, the URL address in the character string is consistent with the URL address in the interface invocation request, the timestamp parameter Timestamp in the character string is consistent with the timestamp parameter Timestamp in the HTTP Header, the platform authentication code AppKey in the character string is consistent with the platform authentication code AppKey in the HTTP header, and the user authentication code AccessKey in the character string is consistent with the user authentication code AccessKey in the HTTP Header.

In addition, an embodiment of the disclosure further provides a resource monitoring method for a hybrid cloud, so as to uniformly monitor a resource of the hybrid cloud, and improve efficiency of resource monitoring of the hybrid cloud. An execution subject of the resource monitoring method for a hybrid cloud in the embodiment of the disclosure may be a background server.

The background server may be a server of a cloud service self-help platform. The server has a common cloud service function, and further records a resource information table generated when the hybrid cloud is created. After receiving a resource monitoring request for the hybrid cloud, the background server determines one or more second target cloud platforms of the hybrid cloud according to the resource monitoring request for the hybrid cloud, and establishes a signal path between the server and each second target cloud platform to uniformly control each second target cloud platform to obtain resource monitoring data of the second target cloud platforms, thereby obtaining resource monitoring data of the hybrid cloud.

The background server may alternatively be a server of a standard application programming interface API. The server of the standard API records a resource information table generated when the hybrid cloud is created. After receiving a resource monitoring request for the hybrid cloud sent by a user by using a cloud service self-help platform, the server determines one or more second target cloud platforms of the hybrid cloud according to the resource monitoring request for the hybrid cloud, establishes a signal path between the server and each second target cloud platform to uniformly control each second target cloud platform to obtain resource monitoring data of the second target cloud platforms, thereby obtaining resource monitoring data of the hybrid cloud, and sends the obtained resource monitoring data of the hybrid cloud to the cloud service self-help platform, to display the data to the user.

Specifically, a resource monitoring method for a hybrid cloud according to an embodiment of the disclosure includes:
receiving a resource monitoring request for a hybrid cloud, where the resource monitoring request is used for requesting to obtain resource monitoring data of the hybrid cloud;
determining a second target cloud platform of the hybrid cloud according to the resource monitoring request;
sending, to the second target cloud platform, a resource monitoring request for the second target cloud platform, where the resource monitoring request for the second target cloud platform is used for requesting to obtain resource monitoring data of the second target cloud platform; and
receiving the resource monitoring data from the second target cloud platform.

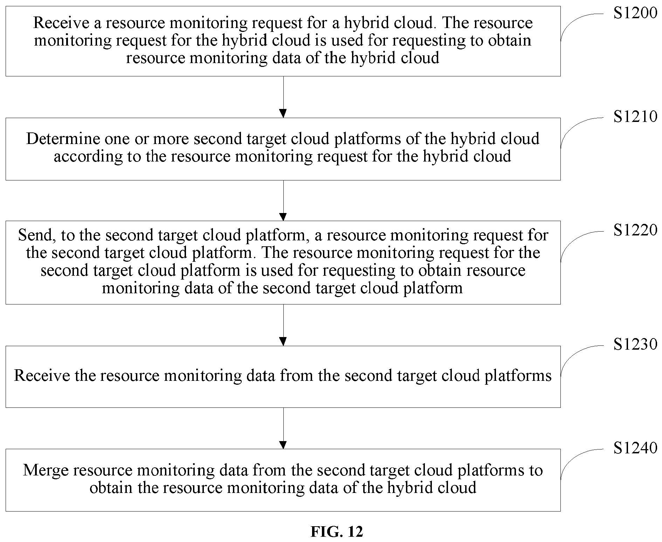

Referring to FIG. 12, FIG. 12 is a flow chart of a resource monitoring method for a hybrid cloud according to an embodiment of the disclosure. Referring to FIG. 12, the method may include steps S1200 to S1240.

In step S1200, a resource monitoring request for a hybrid cloud is received. The resource monitoring request for the hybrid cloud is used for requesting to obtain resource monitoring data of the hybrid cloud.

In this embodiment, the resource monitoring request for the hybrid cloud may be sent by a user by using a cloud service self-help platform, is intended to obtain the resource monitoring data of the hybrid cloud to learn a running condition of the hybrid cloud, and proposes a countermeasure in time according to the running condition of the hybrid cloud.

In this embodiment, multiple types of resource monitoring data of the hybrid cloud may be obtained. Specifically, a monitoring request on any one or more of a central processing unit CPU resource of a cloud server, a memory resource of a cloud server, an intranet bandwidth resource of a cloud server, or a magnetic disk resource of a cloud server in the hybrid cloud may be received. The central processing unit CPU resource of the cloud server includes CPU utilization and a CPU average load. The memory resource of the cloud server includes memory usage and memory utilization. The intranet bandwidth resource of the cloud server includes outbound bandwidth, inbound bandwidth, an out-package amount and an in-package amount, The magnetic disk resource of the cloud server includes magnetic disk reading utilization and magnetic disk writing utilization.

In step S1210, a second target cloud platform of the hybrid cloud is determined according to the resource monitoring request for the hybrid cloud.

The resource monitoring request for the hybrid cloud includes instance ID information of each cloud server in the hybrid cloud. In an implementation, a second target cloud platform of the hybrid cloud may be determined according to the instance ID information of each cloud server in the hybrid cloud. A specific method is described in detail by using the following embodiment.

In step S1220, a resource monitoring request for the second target cloud platform is sent to the second target cloud platform. The resource monitoring request for the second target cloud platform is used for requesting to obtain resource monitoring data of the second target cloud platform.

In a case that a to-be-monitored resource of the hybrid cloud is determined to include resources of multiple second target cloud platforms. In this embodiment, by using the foregoing step, a resource monitoring request for the hybrid cloud may be divided into resource monitoring requests for the multiple second target cloud platforms, and the resource monitoring requests for the multiple second target cloud platforms are respectively sent to corresponding second target cloud platforms, so that the multiple second target cloud platforms synchronously obtain resource monitoring data thereof.

In step S1230, the resource monitoring data from the second target cloud platform is received.

After the second target cloud platforms synchronously obtain resource monitoring data thereof, the obtained resource monitoring data are sent to a background server.

In step S1240, resource monitoring data from the multiple second target cloud platforms is merged to obtain the resource monitoring data of the hybrid cloud.

After the background server receives the resource monitoring data from the second target cloud platforms, resource monitoring data from the second target cloud platforms may be merged to obtain the resource monitoring data of the hybrid cloud.

It should be noted that, merging mentioned in this embodiment may be merging resource monitoring data from the second target cloud platforms into resource monitoring data used for representing the running condition of the hybrid cloud.

In an implementation, after obtaining the resource monitoring data of the hybrid cloud, the resource monitoring data of the hybrid cloud may be displayed.

The resource monitoring method for a hybrid cloud in the embodiment of the present invention includes: receiving a resource monitoring request for a hybrid cloud, where the resource monitoring request for the hybrid cloud is used for requesting to obtain resource monitoring data of the hybrid cloud; determining one or more second target cloud platforms of the hybrid cloud according to the resource monitoring request for the hybrid cloud; sending, to the determined second target cloud platform, a resource monitoring request for the second target cloud platform, where the resource monitoring request for the second target cloud platform is used for requesting to obtain resource monitoring data of the second target cloud platform; receiving the resource monitoring data from the second target cloud platforms; and merging resource monitoring data from the second target cloud platforms to obtain the resource monitoring data of the hybrid cloud. Based on the foregoing method, the resource of the hybrid cloud can be uniformly monitored, thereby further improving efficiency of resource monitoring of the hybrid cloud.

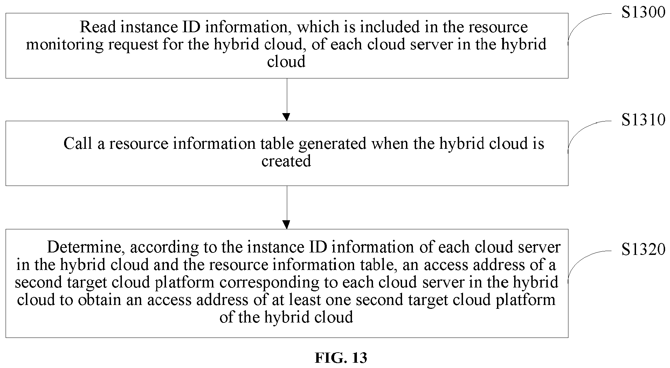

FIG. 13 is a flow chart of a method for determining at least one second target cloud platform of the hybrid cloud according to the resource monitoring request for the hybrid cloud according to an embodiment of the disclosure. Referring to FIG. 13, the method may include steps S1300 to S1320.

In step S1300, instance ID information, which is included in the resource monitoring request for the hybrid cloud, of each cloud server in the hybrid cloud is read.

In step S1310, a resource information table generated when the hybrid cloud is created is called.

After the hybrid cloud is successfully created, a resource information table is stored in a background server. In this embodiment, a resource information table generated when the hybrid cloud is created may be called to determine at least one second target cloud platform of the hybrid cloud. The specifics are described below in detail.

In step S1320, an access address of a second target cloud platform corresponding to each cloud server in the hybrid cloud is determined according to the instance ID information of each cloud server in the hybrid cloud and the resource information table, to obtain an access address of the second target cloud platform of the hybrid cloud.

It should be noted that the foregoing resource information table sets forth related information to a resource of the hybrid cloud, for example, the instance ID information of each cloud server in the hybrid cloud, and equipment room information corresponding to the instance ID information of each cloud server. The equipment room information includes at least an access address of a second target cloud platform corresponding to each cloud server in the hybrid cloud. In this embodiment, the determining, according to the instance ID information of each cloud server in the hybrid cloud and the resource information table, an access address of a second target cloud platform corresponding to each cloud server in the hybrid cloud may include: reading, from the resource information table, equipment room information corresponding to the instance ID information of each cloud server in the hybrid cloud, where the equipment room information includes the access address of the second target cloud platform corresponding to each cloud server in the hybrid cloud; and determining the access address of the second target cloud platform corresponding to each cloud server in the hybrid cloud according to the equipment room information corresponding to the instance ID information of each cloud server in the hybrid cloud.

After the access address of a second target cloud platform corresponding to each cloud server in the hybrid cloud is determined, in an implementation, the sending, to at least one second target cloud platform, a resource monitoring request for the target cloud platform includes:
determining an application programming interface API of the second target cloud platform corresponding to each cloud server according to the access address of the second target cloud platform corresponding to each cloud server; and
sending, to the second target cloud platform, the resource monitoring request for the second target cloud platform via the application programming interface API of the second target cloud platform, where the resource monitoring request for the second target cloud platform is used for requesting to obtain resource monitoring data of each cloud server corresponding to the second target cloud platform.

An application example of a resource monitoring method for a hybrid cloud according to an embodiment of the disclosure may be as follows.

Using that a hybrid cloud to be monitored by a user A by using a cloud service self-help platform includes a cloud platform A, a cloud platform B and a cloud platform C as an example, the cloud platform A, the cloud platform B and the cloud platform C are respectively corresponding to an API-A, an API-B and an API-C. A region of an equipment room of the cloud platform A is North China, the cloud platform A includes cloud servers a1, a2 and a3, and an access address of the cloud platform A is an API-A. A region of an equipment room of the cloud platform B is South China, the cloud platform B includes cloud servers b1, b2 and b3, and an access address of the cloud platform B is an API-B. A region of an equipment room of the cloud platform C is central China, the cloud platform C includes cloud servers c1, c2 and c3, and an access address of the cloud platform C is an API-C.

Referring to FIG. 5, a cloud service self-help platform provides a resource monitoring applying interface. The user A triggers a resource monitoring button on the resource monitoring applying interface, to generate a resource monitoring request for a hybrid cloud. The resource monitoring request is used for requesting to obtain memory resource monitoring data of cloud servers a1, a2, a3, b1, b2, b3, c1, c2 and c3. After the cloud service self-help platform obtains the foregoing resource monitoring request for the hybrid cloud, the cloud service self-help platform sends the resource monitoring request for the hybrid cloud to a background server of a standard API. The background server of the standard API determines, according to a resource information table stored by in the background server of the standard API, that equipment room information corresponding to the foregoing cloud servers a1, a2 and a3 is North China and an access address of a cloud platform corresponding to the region is the API-A, equipment room information corresponding to the foregoing cloud servers b1, b2 and b3 is South China and an access address of a cloud platform corresponding to the region is the API-B, and equipment room information corresponding to the foregoing servers c1, c2 and c3 is central China and an access address of a cloud platform corresponding to the region is the API-C. The background server of the standard API divides the resource monitoring request for the hybrid cloud into a resource monitoring request for the cloud platform A, a resource monitoring request for the cloud platform B, and a resource monitoring request for the cloud platform C. The background server of the standard API sends the foregoing resource monitoring request for the cloud platform A to the cloud platform A via the API-A, sends the foregoing resource monitoring request for the cloud platform B to the cloud platform B via the API-B, and sends the foregoing resource monitoring request for the cloud platform C to the cloud platform C via the API-C. The cloud platform A, the cloud platform B and the cloud platform C monitor memory resources thereof, to obtain corresponding memory resource monitoring data, and send the obtained memory resource monitoring data to the cloud service self-help platform via the API-A, the API-B, the API-C and the standard API. The cloud service self-help platform displays the memory resource monitoring data to the user A by using an interface.

The following describes a resource monitoring apparatus for a hybrid cloud in an embodiment of the disclosure. Cross-reference may be made between the resource monitoring apparatus for a hybrid cloud described below and the foregoing resource monitoring method for a hybrid cloud.

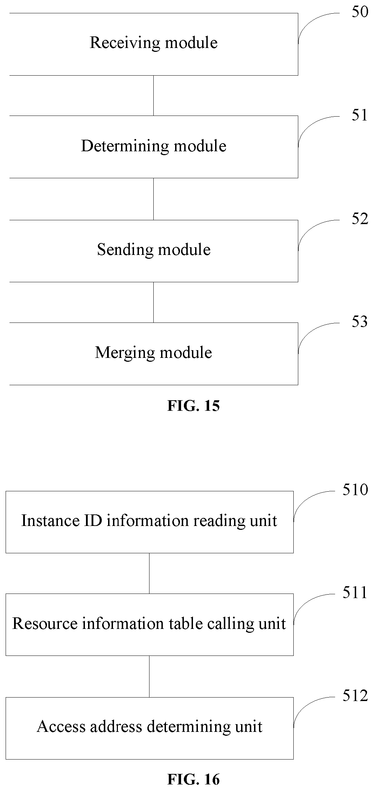

FIG. 15 is a structural block diagram of a resource monitoring system for a hybrid cloud according to an embodiment of the disclosure. The resource monitoring apparatus for a hybrid cloud may specifically be a background server. Referring to FIG. 15, the resource monitoring apparatus for a hybrid cloud may include a receiving module 50, a determining module 51, a sending module 52 and a merging module 53.

The receiving module 50 is configured to receive a resource monitoring request for a hybrid cloud. The resource monitoring request for the hybrid cloud is used for requesting to obtain resource monitoring data of the hybrid cloud.

The determining module 51 is configured to determine one or more second target cloud platforms of the hybrid cloud according to the resource monitoring request for the hybrid cloud.

The sending module 52 is configured to send, to the second target cloud platform, a resource monitoring request for the second target cloud platform. The resource monitoring request for the second target cloud platform is used for requesting to obtain resource monitoring data of the second target cloud platform.

The receiving module 50 is further configured to receive the resource monitoring data from the second target cloud platforms.

The merging module 53 is configured to merge resource monitoring data from the second target cloud platforms to obtain the resource monitoring data of the hybrid cloud.

In an implementation, FIG. 16 is a structural diagram of a determining module 51. Referring to Figure 16, the determining module 51 specifically includes an instance ID information reading unit 510, a resource information table calling unit 511 and an access address determining unit 512.

The instance ID information reading unit 510 is configured to read instance ID information, which is included in the resource monitoring request for the hybrid cloud, of each cloud server in the hybrid cloud.

The resource information table calling unit 511 is configured to call a resource information table generated when the hybrid cloud is created.

The access address determining unit 512 is configured to determine, according to the instance ID information of each cloud server in the hybrid cloud and the resource information table, an access address of a second target cloud platform corresponding to each cloud server in the hybrid cloud to obtain an access address of at least one second target cloud platform of the hybrid cloud.

In an implementation, the access address determining unit is specifically configured to:
read, from the resource information table, equipment room information corresponding to the instance ID information of each cloud server in the hybrid cloud, where the equipment room information includes the access address of the second target cloud platform corresponding to each cloud server in the hybrid cloud; and
determine the access address of the second target cloud platform corresponding to each cloud server in the hybrid cloud according to the equipment room information corresponding to the instance ID information of each cloud server in the hybrid cloud.

In an implementation, the sending module includes an API determining unit and a sending unit.

The API determining unit is configured to determine an application programming interface API of the second target cloud platform corresponding to each cloud server according to the access address of the second target cloud platform corresponding to each cloud server.

The sending unit is configured to send, to the second target cloud platform, the resource monitoring request for the target cloud platform via the application programming interface API of the second target cloud platform. The resource monitoring request for the second target cloud platform is used for requesting to obtain resource monitoring data of each cloud server corresponding to the second target cloud platform.

In an implementation, the receiving module is specifically configured to: receive a monitoring request on any one or more of a central processing unit CPU resource of a cloud server, a memory resource of a cloud server, an intranet bandwidth resource of a cloud server, or a magnetic disk resource of a cloud server in the hybrid cloud.

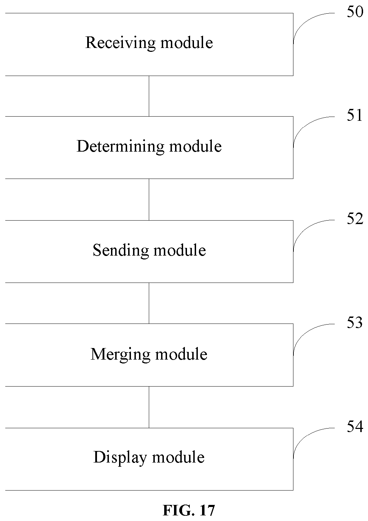

In an implementation, FIG. 17 is a structural block diagram of another resource monitoring system for a hybrid cloud according to an embodiment of the disclosure. With reference to FIG. 15, the resource monitoring system for a hybrid cloud further includes: a display module 54, configured to display the resource monitoring data of the hybrid cloud after the resource monitoring data from the second target cloud platforms are merged to obtain the resource monitoring data of the hybrid cloud.

The resource monitoring system for a hybrid cloud in the embodiment of the disclosure includes a receiving module, a determining module, a sending module and a merging module. The receiving module is configured to receive a resource monitoring request for a hybrid cloud. The resource monitoring request for the hybrid cloud is used for requesting to obtain resource monitoring data of the hybrid cloud. The determining module is configured to determine one or more second target cloud platforms of the hybrid cloud according to the resource monitoring request for the hybrid cloud. The sending module is configured to send, to the second target cloud platform, a resource monitoring request for the second target cloud platform. The resource monitoring request for the second target cloud platform is used for requesting to obtain resource monitoring data of the second target cloud platform. The receiving module is further configured to receive the resource monitoring data from the second target cloud platforms. The merging module is configured to merge resource monitoring data from the second target cloud platforms to obtain the resource monitoring data of the hybrid cloud. Based on the foregoing system, the resource of the hybrid cloud can be uniformly monitored, thereby improving efficiency of resource monitoring of the hybrid cloud.

In an implementation, the resource monitoring system for a hybrid cloud may be a hardware device, may alternatively be software, and may alternatively be hardware instruction software. The foregoing modules and units may be disposed in a functional module in the resource monitoring system for a hybrid cloud. FIG. 10 may alternatively be a structural block diagram of hardware of a resource monitoring apparatus for a hybrid cloud. Referring to FIG. 10, the resource monitoring system for a hybrid cloud may include: a processor 1, a communications interface 2, a memory 3 and a communications bus 4. The processor 1, the communications interface 2 and the memory 3 communicate with each other by using the communications bus 4. The communications interface 2 may be an interface of a communication module, for example, an interface of a GSM module.

The processor 1 is configured to execute a program. The memory 3 is configured to store a program. The program may include program code, and the program code includes computer operation instructions.

The processor 1 may be a central processing unit CPU or an Application Specific Integrated Circuit (ASIC) or may be one or more integrated circuits for implementing the embodiments of the disclosure. The memory 3 may include a high-speed RAM memory, and may also include a non-volatile memory (non-volatile memory), for example, at least one magnetic disk memory.

The program may be specifically used for:
receiving a resource monitoring request for a hybrid cloud, where the resource monitoring request for the hybrid cloud is used for requesting to obtain resource monitoring data of the hybrid cloud;
determining a second target cloud platform of the hybrid cloud according to the resource monitoring request for the hybrid cloud;
sending, to the second target cloud platform, a resource monitoring request for the second target cloud platform, where the resource monitoring request for the second target cloud platform is used for requesting to obtain resource monitoring data of the second target cloud platform; and
receiving the resource monitoring data from the second target cloud platform.

The foregoing interface invocation method for a hybrid cloud and the resource monitoring method for a hybrid cloud may be combined with each other provided that there is no conflict.

Each embodiment in the specification is described in a progressive manner. The same or similar parts in the embodiments are just references to each other. Every embodiment illustrates in emphasis what is different from the other embodiments. The apparatus disclosed in the embodiments corresponds to the method disclosed in the embodiments and therefore is briefly described, and reference may be made to descriptions of the method part for a related part.

A person skilled in the art may further be aware that, units and algorithm steps in the examples described in combination with the embodiments of the disclosure may be implemented by electronic hardware, computer software, or a combination thereof. To clearly describe the interchangeability between the hardware and the software, the foregoing has generally described compositions and steps of each example according to functions. Whether the functions are executed in a mode of hardware or software depends on particular applications and design constraint conditions of the technical solutions. A person skilled in the art may use different methods to implement the described functions for each particular application, but it should not be considered that the implementation goes beyond the scope of the present disclosure.

Steps of the method or algorithm described in combination with the embodiments of the disclosure may be directly implemented using hardware, a software module executed by a processor, or the combination thereof. The software module may be provided in a random access memory (RAM), a memory, a read-only memory (ROM), an electrically programmable ROM, an electrically erasable programmable ROM, a register, a hard disk, a removable disk, a CD-ROM, or any other form of storage medium known in the art.

For the foregoing descriptions of the disclosed embodiments, a person skilled in the art can implement or use the present disclosure.

## Claims

1. An interface invocation method for a hybrid cloud, comprising:
receiving an interface invocation request for a hybrid cloud from an invoker, wherein the interface invocation request is used for indicating an interface of a first target cloud platform that the invoker requests to invoke (S300);
determining the interface of the first target cloud platform according to parameters related to the interface of the first target cloud platform carried in the interface invocation request (S310); and
sending the interface invocation request to the interface of the first target cloud platform (S320),
wherein the method further comprises:
receiving a resource monitoring request for a hybrid cloud, wherein the resource monitoring request is used for requesting to obtain resource monitoring data of the hybrid cloud (S1200);
reading instance ID information, which is comprised in the resource monitoring request for the hybrid cloud, of each cloud server in the hybrid cloud (S1300);
calling a resource information table generated when the hybrid cloud is created (S1310);
determining, according to the instance ID information of each cloud server in the hybrid cloud and the resource information table, an access address of a second target cloud platform corresponding to each cloud server in the hybrid cloud to obtain an access address of the second target cloud platform of the hybrid cloud (S1320), wherein there are a plurality of second target cloud platforms;
based on the access addresses of the plurality of second target cloud platforms corresponding to the hybrid cloud, dividing the resource monitoring request for the hybrid cloud into resource monitoring requests for the plurality of second target cloud platforms, and respectively sending the resource monitoring requests for the plurality of second target cloud platforms to the corresponding second target cloud platforms, so that the plurality of second target cloud platforms synchronously obtain their own resource monitoring data, wherein the resource monitoring request for a second target cloud platform is used for requesting to obtain the resource monitoring data of the second target cloud platform (S1220);
receiving the resource monitoring data from each of the plurality of second target cloud platforms (S1230); and
merging the resource monitoring data from the plurality of second target cloud platforms to obtain the resource monitoring data of the hybrid cloud (S1240).

2. The method according to claim 1, wherein the interface invocation request comprises a uniform resource locator URL address, and
the determining the interface of the first target cloud platform according to parameters related to the interface of the first target cloud platform carried in the interface invocation request (S310) comprises:
determining a type of the first target cloud platform according to a cloud platform type parameter in the URL address;
determining a region, where the interface of the first target cloud platform locates, according to a region parameter in the URL address; and
determining an interface in the region as the interface of the first target cloud platform.

3. The method according to claim 2, wherein before the determining the interface of the first target cloud platform according to parameters related to the interface of the first target cloud platform carried in the interface invocation request (S310), the method further comprises:
performing authentication on the interface invocation request (S410); and
determining the interface of the first target cloud platform according to parameters related to the interface of the first target cloud platform carried in the interface invocation request in a case that the authentication is successful (S420).

4. The method according to claim 3, wherein the interface invocation request further comprises a request type HTTP Method, and the method further comprises:
receiving an HTTP header sent by the invoker, wherein the HTTP header comprises a timestamp parameter Timestamp, a platform authentication code AppKey, a user authentication code AccessKey, and a signature string Signature; and
the performing authentication on the interface invocation request comprises:
obtaining a key parameter SecretKey preallocated to the invoker;
performing authentication on the signature string Signature by using the key parameter SecretKey, and obtaining a character string comprising a request type HTTP Method, a timestamp parameter Timestamp, a URL address, a platform authentication code AppKey, and a user authentication code AccessKey; and
determining that the authentication is successful in a case that the request type HTTP Method in the character string is consistent with the request type in the interface invocation request, the URL address in the character string is consistent with the URL address in the interface invocation request, the timestamp parameter Timestamp in the character string is consistent with the timestamp parameter Timestamp in the HTTP Header, the platform authentication code AppKey in the character string is consistent with the platform authentication code AppKey in the HTTP header, and the user authentication code AccessKey in the character string is consistent with the user authentication code AccessKey in the HTTP Header.

5. The method according to claim 1, wherein the determining, according to the instance ID information of each cloud server in the hybrid cloud and the resource information table, an access address of a second target cloud platform corresponding to each cloud server in the hybrid cloud (S1320) comprises:
reading, from the resource information table, equipment room information corresponding to the instance ID information of each cloud server in the hybrid cloud, wherein the equipment room information comprises the access address of the second target cloud platform corresponding to each cloud server in the hybrid cloud; and
determining the access address of the second target cloud platform corresponding to each cloud server in the hybrid cloud according to the equipment room information corresponding to the instance ID information of each cloud server in the hybrid cloud.

6. The method according to claim 5, wherein the sending, to a second target cloud platform of the plurality of second target cloud platforms, a resource monitoring request for the second target cloud platform (S1220) comprises:
determining an application programming interface API of the second target cloud platform corresponding to each cloud server according to the access address of the second target cloud platform corresponding to each cloud server; and
sending, to the second target cloud platform, the resource monitoring request for the second target cloud platform via the application programming interface API of the second target cloud platform, wherein the resource monitoring request for the second target cloud platform is used for requesting to obtain resource monitoring data of each cloud server corresponding to the second target cloud platform.

7. The method according to claim 1, wherein the receiving a resource monitoring request for a hybrid cloud (S1200) comprises:
receiving a monitoring request on any one or more of a central processing unit CPU resource of a cloud server, a memory resource of a cloud server, an intranet bandwidth resource of a cloud server, or a magnetic disk resource of a cloud server in the hybrid cloud.

8. An interface invocation apparatus for a hybrid cloud, comprising:
a processor (1); and
a memory (3) storing instructions, when executed by the processor (1), causing the processor (1) to perform the interface invocation method for a hybrid cloud according to any one of claims 1 to 7.

9. A storage medium storing instructions, when executed by a processor, causing the processor to perform the interface invocation method for a hybrid cloud according to any one of claims 1 to 7.

## Patentansprüche

1. Schnittstellenaufrufverfahren für eine hybride Cloud, umfassend:
Empfangen einer Schnittstellenaufrufanforderung für eine hybride Cloud von einem Aufrufer, wobei die Schnittstellenaufrufanforderung dazu verwendet wird, eine Schnittstelle einer ersten Ziel-Cloud-Plattform anzugeben, die der Aufrufer aufzurufen wünscht (S300);
Bestimmen der Schnittstelle der ersten Ziel-Cloud-Plattform gemäß Parametern, die sich auf die Schnittstelle der ersten Ziel-Cloud-Plattform beziehen und in der Schnittstellenaufrufanforderung (S310) übertragen werden; und
Senden der Schnittstellenaufrufanforderung an die Schnittstelle der ersten Ziel-Cloud-Plattform (S320),
wobei das Verfahren des Weiteren Folgendes umfasst:
Empfangen einer Ressourcenüberwachungsanforderung für eine hybride Cloud, wobei die Ressourcenüberwachungsanforderung zum Anfordern des Erhalts von Ressourcenüberwachungsdaten der hybriden Cloud verwendet wird (S1200);
Lesen von Instanz-ID-Informationen, die in der Ressourcenüberwachungsanforderung für die hybride Cloud enthalten sind, von jedem Cloud-Server in der hybriden Cloud (S1300);
Aufrufen einer Ressourceninformationstabelle, die bei der Erstellung der hybriden Cloud erzeugt wurde (S1310);
Bestimmen, gemäß der Instanz-ID-Information jedes Cloud-Servers in der hybriden Cloud und der Ressourceninformationstabelle, einer Zugriffsadresse einer zweiten Ziel-Cloud-Plattform, die zu jedem Cloud-Server in der hybriden Cloud korrespondiert, um eine Zugriffsadresse der zweiten Ziel-Cloud-Plattform der hybriden Cloud zu erhalten (S1320), wobei es eine Mehrzahl von zweiten Ziel-Cloud-Plattformen gibt;
basierend auf den Zugriffsadressen der Mehrzahl von zweiten Ziel-Cloud-Plattformen, die zu der hybriden Cloud korrespondieren, Aufteilen der Ressourcenüberwachungsanforderung für die hybride Cloud in Ressourcenüberwachungsanforderungen für die Mehrzahl von zweiten Ziel-Cloud-Plattformen und jeweiliges Senden der Ressourcenüberwachungsanforderungen für die Mehrzahl von zweiten Ziel-Cloud-Plattformen an die entsprechenden zweiten Ziel-Cloud-Plattformen, so dass die Mehrzahl von zweiten Ziel-Cloud-Plattformen synchron ihre eigenen Ressourcenüberwachungsdaten erhalten, wobei die Ressourcenüberwachungsanforderung für eine zweite Ziel-Cloud-Plattform zum Anfordern, die Ressourcenüberwachungsdaten der zweiten Ziel-Cloud-Plattform zu erhalten, verwendet wird (S1220);
Empfangen der Ressourcenüberwachungsdaten von jeder der Mehrzahl von zweiten Ziel-Cloud-Plattformen (S1230); und
Zusammenführen der Ressourcenüberwachungsdaten von der Mehrzahl der zweiten Ziel-Cloud-Plattformen, um die Ressourcenüberwachungsdaten der hybriden Cloud zu erhalten (S1240).

2. Verfahren nach Anspruch 1, wobei die Schnittstellenaufrufanforderung eine URL-Adresse, Uniform Resource Locator, umfasst, und
das Bestimmen der Schnittstelle der ersten Ziel-Cloud-Plattform gemäß Parametern, die sich auf die Schnittstelle der ersten Ziel-Cloud-Plattform beziehen und in der Schnittstellenaufrufanforderung (S310) übertragen werden, umfasst:
Bestimmen eines Typs der ersten Ziel-Cloud-Plattform gemäß einem Cloud-Plattform-Typ-Parameter in der URL-Adresse;
Bestimmen einer Region, in der sich die Schnittstelle der ersten Ziel-Cloud-Plattform befindet, gemäß einem Regionsparameter in der URL-Adresse; und
Bestimmung einer Schnittstelle in der Region als Schnittstelle der ersten Ziel-Cloud-Plattform.

3. Verfahren nach Anspruch 2, wobei das Verfahren vor dem Bestimmen der Schnittstelle der ersten Ziel-Cloud-Plattform anhand von Parametern, die sich auf die Schnittstelle der ersten Ziel-Cloud-Plattform beziehen und in der Schnittstellenaufrufanforderung (S310) übertragen werden, des Weiteren Folgendes umfasst:
Durchführen einer Authentifizierung für die Schnittstellenaufrufanforderung (S410); und
Bestimmen der Schnittstelle der ersten Ziel-Cloud-Plattform anhand von Parametern, die sich auf die Schnittstelle der ersten Ziel-Cloud-Plattform beziehen und in der Schnittstellenaufrufanforderung übertragen werden, falls die Authentifizierung erfolgreich ist (S420) .

4. Verfahren nach Anspruch 3, wobei die Schnittstellenaufrufanforderung des Weiteren eine Anforderungstyp-HTTP-Methode umfasst und das Verfahren des Weiteren umfasst:
Empfangen eines vom Aufrufer gesendeten HTTP-Headers, wobei der HTTP-Header einen Zeitstempelparameter Timestamp, einen Plattformauthentifizierungscode AppKey, einen Benutzerauthentifizierungscode AccessKey und eine Signaturzeichenfolge Signature umfasst; und
das Durchführen der Authentifizierung bei der Schnittstellenaufrufanforderung umfasst:
Erhalten eines Schlüsselparameters SecretKey, der dem Aufrufer vorab zugewiesen wurde;
Durchführen einer Authentifizierung auf der Signaturzeichenkette Signature unter Verwendung des Schlüsselparameters SecretKey und Erhalten einer Zeichenkette, die eine Anforderungstyp-HTTP-Methode, einen Zeitstempelparameter Timestamp, eine URL-Adresse, einen Plattformauthentifizierungscode AppKey und einen Benutzerauthentifizierungscode AccessKey umfasst; und
Feststellung, dass die Authentifizierung erfolgreich ist, in einem Fall, dass die Anforderungstyp-HTTP-Methode in der Zeichenkette mit dem Anforderungstyp in der Schnittstellenaufrufanforderung übereinstimmt, die URL-Adresse in der Zeichen kette mit der URL-Adresse in der Schnittstellenaufrufanforderung übereinstimmt, der Zeitstempel-Parameter Timestamp in der Zeichenkette mit dem Zeitstempel-Parameter Timestamp in dem HTTP-Header übereinstimmt, der Plattform-Authentifizierungscode AppKey in der Zeichenkette mit dem Plattform-Authentifizierungscode AppKey in dem HTTP-Header übereinstimmt, und der Benutzer-Authentifizierungscode AccessKey in der Zeichenkette mit dem Benutzer-Authentifizierungscode AccessKey in dem HTTP-Header übereinstimmt.

5. Verfahren nach Anspruch 1, wobei das Bestimmen, gemäß der Instanz-ID-Information jedes Cloud-Servers in der hybriden Cloud und der Ressourceninformationstabelle (S1320), einer Zugriffsadresse einer zweiten Ziel-Cloud-Plattform, die zu jedem Cloud-Server in der hybriden Cloud korrespondiert, umfasst:
Lesen, aus der Ressourceninformationstabelle, von Ausrüstungsrauminformationen, die zu der Instanz-ID-Information jedes Cloud-Servers in der hybriden Cloud korrespondieren, wobei die Ausrüstungsrauminformationen die Zugangsadresse der zweiten Ziel-Cloud-Plattform umfassen, die zu jedem Cloud-Server in der hybriden Cloud korrespondiert; und
Bestimmen der Zugriffsadresse der zweiten Ziel-Cloud-Plattform, die zu jedem Cloud-Server in der hybriden Cloud korrespondiert, gemäß den Ausrüstungsrauminformationen, die zu den Instanz-ID-Informationen jedes Cloud-Servers in der hybriden Cloud korrespondieren.

6. Verfahren nach Anspruch 5, wobei das Senden, an eine zweite Ziel-Cloud-Plattform aus der Mehrzahl der zweiten Ziel-Cloud-Plattformen, einer Ressourcenüberwachungsanforderung für die zweite Ziel-Cloud-Plattform (S1220) umfasst:
Bestimmen einer Anwendungsprogrammierschnittstelle, API, der zweiten Ziel-Cloud-Plattform, die zu jedem Cloud-Server korrespondiert, gemäß der Zugangsadresse der zweiten Ziel-Cloud-Plattform, die zu jedem Cloud-Server korrespondiert; und
Senden, an die zweite Ziel-Cloud-Plattform, der Ressourcenüberwachungsanforderung für die zweite Ziel-Cloud-Plattform über die Anwendungsprogrammierschnittstelle, API, der zweiten Ziel-Cloud-Plattform, wobei die Ressourcenüberwachungsanforderung für die zweite Ziel-Cloud-Plattform zum Anfordern des Erhalts von Ressourcenüberwachungsdaten jedes Cloud-Servers, der zu der zweiten Ziel-Cloud-Plattform korrespondiert, verwendet wird.

7. Verfahren nach Anspruch 1, wobei das Empfangen einer Ressourcenüberwachungsanforderung für eine hybride Cloud (S1200) umfasst:
Empfangen einer Überwachungsanforderung für eine oder mehrere Zentralverarbeitungseinheitsressourcen, CPU, eines Cloud-Servers, eine Speicherressource eines Cloud-Servers, eine Intranet-Bandbreitenressource eines Cloud-Servers oder eine Magnetplattenressource eines Cloud-Servers in der hybriden Cloud.

8. Schnittstellenaufrufvorrichtung für eine hybride Cloud, die Folgendes umfasst:
einen Prozessor (1); und
einen Speicher (3), der Befehle speichert, die, wenn sie von dem Prozessor (1) ausgeführt werden, den Prozessor (1) veranlassen, das Schnittstellenaufrufverfahren für eine hybride Cloud nach einem der Ansprüche 1 bis 7 durchzuführen.

9. Speichermedium, das Befehle speichert, die, wenn sie von einem Prozessor ausgeführt werden, den Prozessor veranlassen, das Schnittstellenaufrufverfahren für eine hybride Cloud nach einem der Ansprüche 1 bis 7 durchzuführen.

## Revendications

1. Procédé d'invocation d'interface pour un nuage hybride, comprenant:
recevoir une requête d'invocation d'interface pour un nuage hybride en provenance d'un invocateur, dans lequel la requête d'invocation d'interface est utilisée pour indiquer une interface d'une première plate-forme de nuage cible que l'invocateur demande d'invoquer (S300);
déterminer l'interface de la première plate-forme de nuage cible en fonction de paramètres qui sont liés à l'interface de la première plate-forme de nuage cible et sont transmis dans la requête d'invocation d'interface (S310); et
envoyer la requête d'invocation d'interface à l'interface de la première plate-forme de nuage cible (S320),
dans lequel le procédé comprend en outre:
recevoir une requête de surveillance de ressource pour un nuage hybride, dans lequel la requête de surveillance de ressource est utilisée pour demander d'obtenir des données de surveillance de ressource du nuage hybride (S1200);
lire des informations d'ID d'instance qui sont incluses dans la requête de surveillance de ressource pour le nuage hybride, de chaque serveur de nuage dans le nuage hybride (S1300);
appeler une table d'informations de ressource générée lorsque le nuage hybride est créé (S1310);
déterminer, selon l'information d'ID d'instance de chaque serveur de nuage dans le nuage hybride et la table d'informations de ressource, une adresse d'accès d'une deuxième plate-forme de nuage cible correspondant à chaque serveur de nuage dans le nuage hybride pour obtenir une adresse d'accès de la deuxième plate-forme de nuage cible du nuage hybride (S1320), dans lequel il y a une pluralité de deuxièmes plates-formes de nuage cible;
sur la base des adresses d'accès de la pluralité de deuxièmes plate-formes de nuage cible correspondant au nuage hybride, diviser la requête de surveillance de ressource pour le nuage hybride en requêtes de surveillance de ressource pour la pluralité de deuxièmes plate-formes de nuage cible, et envoyer respectivement les requêtes de surveillance de ressource pour la pluralité de deuxièmes plates-formes de nuage cible aux deuxièmes plate-formes de nuage cible correspondantes de sorte que la pluralité de deuxièmes plates-formes de nuage cible obtienne de manière synchrone leurs propres données de surveillance de ressource, dans lequel la requête de surveillance de ressource pour une deuxième plate-forme de nuage cible est utilisée pour demander d'obtenir les données de surveillance de ressource de la deuxième plate-forme de nuage cible (S1220);
recevoir les données de surveillance de ressource de chacune de la pluralité de deuxièmes plates-formes de nuage cible (S1230); et
fusionner les données de surveillance de ressource provenant de la pluralité de deuxièmes plates-formes de nuage cible pour obtenir les données de surveillance de ressource du nuage hybride (S1240).

2. Procédé selon la revendication 1, dans lequel la requête d'invocation d'interface comprend une adresse URL, Localisateur Uniforme de Ressource, et
la détermination de l'interface de la première plate-forme de nuage cible selon des paramètres qui sont liés à l'interface de la première plate-forme de nuage cible et sont transmis dans la requête d'invocation d'interface (S310) comprend:
déterminer un type de la première plate-forme de nuage cible selon un paramètre de type de plate-forme de nuage dans l'adresse URL;
déterminer une région où se situe l'interface de la première plate-forme de nuage cible, selon un paramètre de région dans l'adresse URL; et
déterminer une interface dans la région en tant qu'interface de la première plate-forme de nuage cible.

3. Procédé selon la revendication 2, dans lequel, avant de déterminer l'interface de la première plate-forme de nuage cible en fonction de paramètres liés à l'interface de la première plate-forme de nuage cible et transmis dans la requête d'invocation d'interface (S310), le procédé comprend en outre:
mettre en oeuvre une authentification sur la requête d'invocation d'interface (S410); et
déterminer l'interface de la première plate-forme de nuage cible en fonction de paramètres qui sont liés à l'interface de la première plate-forme de nuage cible et sont transmis dans la requête d'invocation d'interface dans un cas où l'authentification est couronnée de succès (S420).

4. Procédé selon la revendication 3, dans lequel la requête d'invocation d'interface comprend en outre une méthode HTTP de type requête, et le procédé comprend en outre:
recevoir un en-tête HTTP envoyé par l'invocateur, dans lequel l'en-tête HTTP comprend un paramètre d'horodatage Timestamp, un code d'authentification de plate-forme AppKey, un code d'authentification d'utilisateur AccessKey et une chaîne de signature Signature; et
la mise en oeuvre de l'authentification sur la requête d'invocation d'interface comprend:
obtenir un paramètre de clé SecretKey préalloué à l'invocateur;
mettre en oeuvre une authentification sur la chaîne de signature Signature en utilisant le paramètre de clé SecretKey, et obtenir une chaîne de caractères comprenant une méthode HTTP de type requête, un paramètre d'horodatage Timestamp, une adresse URL, un code d'authentification de plate-forme AppKey et un code d'authentification d'utilisateur AccessKey; et
déterminer que l'authentification est couronnée de succès dans un cas où la méthode HTTP de type requête dans la chaîne de caractères est cohérent avec le type requête dans la requête d'invocation d'interface, l'adresse URL dans la chaîne de caractères est cohérente avec l'adresse URL dans la requête d'invocation d'interface, le paramètre d'horodatage Timestamp dans la chaîne de caractères est cohérent avec le paramètre d'horodatage Timestamp dans l'en-tête HTTP, le code d'authentification de plate-forme AppKey dans la chaîne de caractères est cohérent avec le code d'authentification de plate-forme AppKey dans l'en-tête HTTP et le code d'authentification d'utilisateur AccessKey dans la chaîne de caractères est cohérent avec le code d'authentification d'utilisateur AccessKey dans l'en-tête HTTP.

5. Procédé selon la revendication 1, dans lequel la détermination - selon l'information d'ID d'instance de chaque serveur de nuage dans le nuage hybride et la table d'informations de ressource (S1320) - d'une adresse d'accès d'une deuxième plate-forme de nuage cible correspondant à chaque serveur de nuage dans le nuage hybride comprend:
lire, à partir de la table d'informations de ressource, des informations de salle d'équipement correspondant à l'information d'ID d'instance de chaque serveur de nuage dans le nuage hybride, dans lequel les informations de salle d'équipement comprennent l'adresse d'accès de la deuxième plate-forme de nuage cible correspondant à chaque serveur de nuage dans le nuage hybride; et
déterminer l'adresse d'accès de la deuxième plate-forme de nuage cible correspondant à chaque serveur de nuage dans le nuage hybride, selon les informations de salle d'équipement correspondant aux informations d'ID d'instance de chaque serveur de nuage dans le nuage hybride.

6. Procédé selon la revendication 5, dans lequel l'envoi, à une deuxième plate-forme de nuage cible de la pluralité de deuxièmes plate-formes de nuage cible, d'une requête de surveillance de ressource pour la deuxième plate-forme de nuage cible (S1220) comprend:
déterminer une interface de programmation d'application, API, de la deuxième plate-forme de nuage cible correspondant à chaque serveur de nuage, en fonction de l'adresse d'accès de la deuxième plate-forme de nuage cible correspondant à chaque serveur de nuage; et
envoyer, à la deuxième plate-forme de nuage cible, la requête de surveillance de ressource pour la deuxième plate-forme de nuage cible via l'interface de programmation d'application, API, de la deuxième plate-forme de nuage cible, dans lequel la requête de surveillance de ressource pour la deuxième plate-forme de nuage cible est utilisée pour demander d'obtenir des données de surveillance de ressource de chaque serveur de nuage correspondant à la deuxième plate-forme de nuage cible.

7. Procédé selon la revendication 1, dans lequel la réception d'une requête de surveillance de ressource pour un nuage hybride (S1200) comprend:
recevoir une requête de surveillance sur une ou plusieurs parmi une ressource d'unité centrale de traitement, CPU, d'un serveur de nuage, une ressource de mémoire d'un serveur de nuage, une ressource de bande passante d'intranet d'un serveur de nuage ou une ressource de disque magnétique d'un serveur de nuage dans le nuage hybride.

8. Dispositif d'invocation d'interface pour un nuage hybride, comprenant:
un processeur (1); et
une mémoire (3) stockant des instructions qui, lorsqu'elles sont exécutées par le processeur (1), amènent le processeur (1) à mettre en oeuvre le procédé d'invocation d'interface pour un nuage hybride selon l'une quelconque des revendications 1 à 7.

9. Support de stockage stockant des instructions qui, lorsqu'elles sont exécutées par un processeur, amènent le processeur à mettre en oeuvre le procédé d'invocation d'interface pour un nuage hybride selon l'une quelconque des revendications 1 à 7.
